# EUROPEAN PATENT APPLICATION

(11) **EP 4 374 960 A1**
(43) Date of publication of application: **29.05.2024**
(21) Application number: 22845481.5
(22) Date of filing: 07.09.2022
(51) Int. Cl.: B01J 19/10

(54) **APPARATUS AND METHOD FOR ACOUSTIC RESONANCE ENHANCED CHEMICAL REACTION**

(30) Priority: 22.07.2021 CN 202110829765
(71) Applicant: Xi'an Modern Chemistry Research Institute, Xi'an, Shaanxi 710065 (CN)
(72) Inventor: CHEN, Song, Shaanxi 710065 (CN); LIAN, Peng, Shaanxi 710065 (CN); ZHANG, Shenglong, Shaanxi 710065 (CN); WANG, Xijie, Shaanxi 710065 (CN); ZHANG, Zhe, Shaanxi 710065 (CN); KANG, Chao, Shaanxi 710065 (CN); ZHANG, Yaoxuan, Shaanxi 710065 (CN); MA, Ning, Shaanxi 710065 (CN)
(74) Representative: Meyer, Thorsten
(86) International application number: PCT/CN2022/117548
(87) International publication number: WO 2023/001318

(57) **Abstract**

The present disclosure provides a method for enhancing chemical reaction using resonant acoustic mixing, including: step 1: adding each part of a reaction material into a reactor fixed on an acoustic resonance reaction platform; step 2: adjusting an acceleration G of the acoustic resonance reaction platform by means of a phase difference, performing frequency sweep within a low-frequency range, and determining a frequency at which the acceleration G has a peak value as a resonant frequency; and step 3: allowing each part of the reaction material to react at the resonant frequency and a set acceleration G1 to produce a suspension; and subjecting the suspension to filtration, drying, and baking sequentially to give a reaction product, wherein the acceleration G and the acceleration G1 are constant values, 1g ≤ G ≤ 90g, and 1g ≤ G1 ≤ 90g, where g denotes a gravitational acceleration, g = 9.8 m/s². The method of the present disclosure is applicable to various reaction systems including gas-liquid, liquid-liquid, solid-liquid, and exothermic systems. The reaction conditions are mild and particularly suitable for synthesis of hazardous chemicals with high sensitivity to mechanical stimuli.

## Description

### TECHNICAL FIELD

The present disclosure relates to the technical field of synthesis processes, and in particular to a device and method for enhancing chemical reaction using resonant acoustic mixing.

### BACKGROUND

A chemical reaction process is a transfer process of mass, heat, and momentum. Due to low mixing efficiency of a mixing blade on reaction materials, traditional tank reaction processes have low mass and heat transfer efficiency and require a long reaction time, making them hard to achieve continuity. Industrial production equipment has a huge volume, and especially has disadvantages of high liquid holdup and high risk in synthesis of hazardous chemicals (such as energetic materials). In view of this, chemical synthesis researchers are committed to developing new processes and equipment of chemical reaction to effectively enhance chemical reaction processes, so as to improve reaction efficiency and achieve continuity. Enhancement of a chemical reaction process aims to use new techniques and equipment to greatly reduce the volume of reaction equipment and significantly improve chemical reaction efficiency. At present, mainstream methods for enhancing chemical reaction processes include static mixing reaction technique, microchannel reaction technique, and microwave reaction technique. The static mixing reaction technique changes flow states of fluids in a tube by a mixing unit fixed inside the tube to achieve good dispersion and thorough mixing of different fluids. The static mixing reaction technique has the advantages of low energy consumption and simple equipment structure. However, it has low mixing efficiency in reaction systems with high viscosity. As for the microchannel reaction technique, due to small sizes of internal channels, the heat and mass transfer efficiency of chemical fluids in microchannels is significantly improved compared to conventional reaction systems. The microchannel reaction technique is mainly used for gas-phase reactions, liquid-phase reactions, and gas-liquid and liquid-liquid reactions. However, a reaction system with a solid phase is likely to block the tube, and the microchannel reaction technique is not suitable for reaction systems with a solid phase. The microwave reaction technique is a reaction enhancement technique that accelerates a reaction rate through a special heating method of microwave. It has an enhancing effect on endothermic reactions, but it can cause radiation pollution and is not suitable for exothermic reactions.

### SUMMARY

In view of the shortcomings existing in the prior art, an objective of the present disclosure is to provide a device and method for enhancing chemical reaction using resonant acoustic mixing. The present disclosure solves the technical problem that the prior art lacks a chemical reaction enhancement method suitable for a reaction system containing a solid-phase reaction material as well as an exothermic reaction system. The present disclosure improves the heat and mass transfer efficiency of a reaction system and accelerates an apparent reaction rate of a chemical reaction. In the present disclosure, a reaction material is loaded at a high acceleration under a resonance condition so that a mixing effect of macroscopic coupling and microscopic coupling is generated within the reaction materials, thereby enhancing the heat and mass transfer processes of the chemical reaction.

To achieve the above objective, the present disclosure adopts the following technical solutions.

A method for enhancing chemical reaction using resonant acoustic mixing includes the following steps:
step 1: adding each component of a reaction material into a reactor fixed to an acoustic resonance reaction platform;
step 2: adjusting an acceleration G of the acoustic resonance reaction platform by means of a phase difference, performing frequency sweep within a low frequency range, and determining a frequency at which the acceleration G has a peak value as a resonant frequency; and
step 3: allowing each component of the reaction material to react at the resonant frequency and a set acceleration G1 to produce a suspension; and subjecting the suspension to filtration, drying, and baking sequentially to give a reaction product;
wherein, the acceleration G and the acceleration G1 are constant values, 1g ≤ G ≤ 90g, and 1g ≤ G1 ≤ 90g, where g denotes a gravitational acceleration, g = 9.8 m/s².

The present disclosure further has the following technical features.

Specifically, the energetic material includes one of more of the group consisting of *N*-methyl-p-nitroaniline, glyoxime, 2-methyl-4,6-pyrimidinedione, nitroglycerin (NG), 2,4,6-trinitrotoluene (TNT), hexogen (RDX), octogen (HMX), pentaerythrityl tetranitrate (PETN), hexanitrohexaazaisowurtzitane (CL-20), 1,1-diamino-2,2-dinitroethene (FOX-7), dihydroxylammonium 5,5'-bistetrazole-1,1'-diolate (HATO), 3-nitro-1,2,4-triazole-5-one (NTO), ammonium dinitramide (ADN), and 2,6-diamino-3,5-dinitropyrazine-1-oxide (LLM-105).

Furthermore, the phase difference has a value in a range of 0.01-0.2.

Furthermore, the frequency sweep is performed within a low frequency range of 58-70 Hz, with a step of 0.2-2 Hz and a dwell time of 1-3 s at each frequency point.

Furthermore, for a solid-liquid reaction, when a weight percentage of a solid component of the reaction material is 0.1-40 wt%, the acceleration G1 is adjusted within a range of 30-90g; and

for a homogeneous reaction, the acceleration G1 is adjusted within a range of 1-90g.

Furthermore, the frequency sweep is performed with a step of 0.5 Hz and a dwell time of 2 s at each frequency point.

A device for enhancing chemical reaction using resonant acoustic mixing is configured to implement the method for enhancing chemical reaction using resonant acoustic mixing, and includes a controller and an acoustic resonance reaction platform that are connected to each other, and a reactor located on the acoustic resonance reaction platform;
the acoustic resonance reaction platform includes a support plate and an excitation source located below the support plate, the excitation source is connected to the controller and configured to provide a vibration quantity for the acoustic resonance reaction platform so as to enhance a chemical reaction inside the reactor, and the acoustic resonance reaction platform is further provided with an acceleration sensor for measuring an acceleration of the acoustic resonance reaction platform in real time and transmitting a measured acceleration value to the controller;
the controller is configured to adjust a phase of the excitation source in real time based on the measured acceleration value so as to adjust the acceleration of the acoustic resonance reaction platform; and
the reactor includes a feed inlet connected to a slurry pump and a liquid pump and a discharge outlet connected to a filter, and the filter is connected to a waste liquid tank and a drying oven.

Specifically, the excitation source is comprised of oscillating motors, and there are 2-6 oscillating motors.

Furthermore, the reactor is further connected to a high low temperature integrated machine.

Furthermore, an oscillating spring is provided between the support plate and the excitation source, and one end of the oscillating spring is connected to the support plate and the other end of the oscillating spring is connected to the excitation source.

Compared to the prior art, the present disclosure has the following technical effects.

The method of the present disclosure is applicable to various reaction systems including gas-liquid, liquid-liquid, solid-liquid, and exothermic systems. The reaction conditions are mild and suitable for both tubular continuous reactions and traditional tank reactions. Compared to traditional tank reactions, the reaction by using the method of the present disclosure significantly reduces the reaction time. The method of the present disclosure reduces a shear force on materials during a mixing process, and is particularly suitable for synthesis of hazardous chemicals with high sensitivity to mechanical stimuli.

The device of the present disclosure features a simple structure and convenient operation, and is suitable for promotion.

### BRIEF DESCRIPTION OF THE DRAWINGS

FIG. 1 is a principle comparison diagram of a mechanical mixing blade-enhanced reaction and an acoustic resonance enhanced reaction;
FIG. 2 is a structural diagram of a device for enhancing chemical reaction using resonant acoustic mixing according to the present disclosure;
FIG. 3 shows a particle size test result of *N*-methyl-*p*-nitroaniline prepared in Example 1 according to the present disclosure; and
FIG. 4 shows a purity test result of *N*-methyl-*p*-nitroaniline prepared in Example 1 according to the present disclosure.

### Reference Numerals:

1. controller; 2. acoustic resonance reaction platform; 3. reactor; 4. slurry pump; 5. liquid pump; 6. filter; 7. waste liquid tank; 8. drying oven; 9. high low temperature integrated machine; 10. oscillating spring; 21. support plate; 22. excitation source; 23. acceleration sensor; 41. slurry tank; and 42. liquid tank.

The present disclosure will be explained in detail below with reference to the drawings.

### DETAILED DESCRIPTION

Unless otherwise specified, the terms or methods mentioned herein are understandable to those of ordinary skill in the related art based on conventional knowledge or implemented through existing relevant methods.

The technical terms of the present disclosure are explained as follows.

Homogeneous reaction refers to a chemical reaction that occurs only in one phase (gas phase, liquid phase, or solid phase).

Energetic material refers to a substance that can quickly release a large amount of energy and do work. This type of substance often has explosion and deflagration properties.

The present disclosure provides a method for enhancing chemical reaction using resonant acoustic mixing, including the following steps.
Step 1. Each component of a reaction material is added into a reactor fixed to an acoustic resonance reaction platform.
Step 2. An acceleration G of the acoustic resonance reaction platform is adjusted by means of a phase difference, frequency sweep is carried out within a low frequency range, and a frequency at which the acceleration G has a peak value is determined as a resonant frequency.
Step 3. Each component of the reaction material is allowed to react at the resonant frequency and a set acceleration G1 to produce a suspension, and the suspension is subjected to filtration, drying, and baking sequentially to give a reaction product.

The acceleration G and the acceleration G1 are constant values, 1g ≤ G ≤ 90g, and 1g ≤ G1 ≤ 90g, where g denotes a gravitational acceleration, g = 9.8 m/s².

The phase difference has a value in a range of 0.01-0.2.

The frequency sweep is performed within a low frequency range of 58-70 Hz, with a step of 0.2-2 Hz and a dwell time of 1-3 s at each frequency point.

For a solid-liquid reaction, when a weight percentage of a solid component of the reaction material is 0.1-40wt%, the acceleration G1 is adjusted within a range of 30-90g.

For a homogeneous reaction, the acceleration G1 is adjusted within a range of 1-90g.

The energetic material includes one of more of the group consisting of *N-*methyl-*p-*nitroaniline, glyoxime, 2-methyl-4,6-pyrimidinedione, nitroglycerin (NG), 2,4,6-trinitrotoluene (TNT), hexogen (RDX), octogen (HMX), pentaerythrityl tetranitrate (PETN), hexanitrohexaazaisowurtzitane (CL-20), 1,1-diamino-2,2-dinitroethene (FOX-7), dihydroxylammonium 5,5'-bistetrazole-1,1'-diolate (HATO), 3-nitro-1,2,4-triazole-5-one (NTO), ammonium dinitramide (ADN), and 2,6-diamino-3,5-dinitropyrazine-1-oxide (LLM-105).

It should be noted that in the present disclosure, besides the above materials, the reaction material further includes other organic and inorganic substances, such as inorganic acids and metal oxides that can serve as catalysts. The reaction types mainly include synthesis reactions of gas-phase/liquid-phase, liquid-phase/liquid-phase, and solid-phase/liquid-phase reaction materials. The method of the present disclosure is particularly suitable for non-kinetically controlled organic chemical reactions, especially for the synthesis of hazardous chemicals with high sensitivity to mechanical stimuli. For example, in Example 1, an ethanol solution of nitrofluorobenzene and an aqueous solution of methylamine are reacted to synthesize *N*-methyl-*p*-nitroaniline; and in Example 2, an aqueous solution of glyoxal, an aqueous solution of hydroxylamine hydrochloride, and an aqueous solution of sodium hydroxide are reacted to synthesize glyoxime.

In the present disclosure, a vibration phase difference of the excitation source is adjusted by the controller. The frequency sweep within the low frequency range starts from a set value. A small phase difference is set, and the frequency value increases at a certain step. The acceleration G of the acoustic resonance reaction platform is observed. The frequency at which the acceleration G has a peak value is determined as the resonant frequency. Since the load of the acoustic resonance reaction platform is different from the reaction system inside the reactor a resonant frequency fluctuates within a set range, and the frequency sweep must be performed to determine the resonance state, so as to affect the acceleration of the acoustic resonance reaction platform.

The ranges of values for the acceleration G1 and the resonant frequency of the acoustic resonance reaction platform are all feasible values determined for existing reaction systems, which are values that can enable the chemical reaction to achieve the highest effect and efficiency in a black box state. The acceleration G1 of the acoustic resonance reaction platform is determined after comprehensive consideration of a load required for enhancing a solid-liquid or homogeneous reaction and a dispersion effect required for enhancing the reaction. A minimum acceleration that produces a significant reaction enhancing effect for a liquid-liquid or homogeneous reaction is 1g, and after the acceleration is greater than 80g, the enhancing effect is no longer significantly improved.

For a solid-liquid reaction, solid phase dispersion requires additional loading. Therefore, a greater acceleration is required for the whole enhancement dispersion. Since there is a positive correlation between the acceleration required for the reaction system to produce a significant enhancing effect and a solid content of the system, based on the required loading of the system and multiple actual experimental verifications, the acceleration of the solid-liquid reaction system is controlled within a range of 30-90g. In preferred embodiments, the acceleration G1 of the acoustic resonance reaction platform is 90g when a solid-to-liquid ratio is 30-40 wt%, 80g when a solid-to-liquid ratio is 25-30 wt%, 70g when a solid-to-liquid ratio is 20-25 wt%, 60g when a solid-to-liquid ratio is 15-20 wt%, 50g when a solid-to-liquid ratio is 10-15 wt%, 40g when a solid-to-liquid ratio is 5-10 wt%, and 30g when a solid-to-liquid ratio is 0-5 wt%.

In the method of the present disclosure, multiple oscillating motors are provided inside the acoustic resonance reaction platform as the excitation source. When the oscillating motors reach resonance, the reaction material is loaded with a large acceleration (1-90g). A mixing effect of macroscopic coupling and microscopic coupling is generated inside the material to enhance the heat and mass transfer processes of the chemical reaction. Compared to a macroscopic mixing effect of a mixing blade in a traditional tank reaction, the method of the present disclosure can achieve coupling of a large amount of micrometer-level turbulences and macroscopic eddy currents inside the reaction material. Each of local turbulences can exert a mixing effect similar to a traditional mixing blade, thereby significantly improving the heat and mass transfer efficiency of the entire reaction system, and accelerating the apparent reaction rate of the chemical reaction. Meanwhile, under the shear effect of the micrometer-level turbulences, the particle size of solid particles generated in the reaction system can be controlled at a micrometer scale. The strong turbulences keep the solid particles suspended in the reaction solution, effectively avoiding accumulation and blockage of a solid material in the reaction system.

According to the method of the present disclosure, those skilled in the art can optimize and select relevant parameters or technical means such as the type of component, amount of component and reaction temperature of the mixed material, and resonant frequency and acceleration, through conventional experimental methods.

The reactor described in the present disclosure is a sealable reaction vessel that does not affect or interfere with the reaction in the present disclosure, such as a reaction kettle with a sealing cover, and specifically, a stainless steel hydrothermal reaction kettle.

The present disclosure is specifically described below through examples, comparative examples, and drawings. It should be noted that the following examples are only intended for further explanation of the present disclosure and cannot be understood as limiting the protection scope of the present disclosure. Researchers in the art can make non-essential improvements and adjustments to the present disclosure based on the content of the present disclosure.

### Example 1

In this example, first, a high low temperature integrated machine was turned on. The temperature of the reactor was set to 75 °C. 90 g (0.64 mol) of p-nitrofluorobenzene was taken and dissolved in 450 ml of ethanol to produce a solution. Then, the solution and 108 g of an aqueous solution of methylamine (40 wt%) were added to the reactor through a metering pump. The reactor was fixed to an acoustic resonance reaction platform.

The phase difference was set to 0.07. Frequency sweeping was performed within a range of 58-70 Hz, with a step of 0.5 Hz. The resonant frequency at which the acceleration G has a peak value was 66.7 Hz.

In this example, a mass of the solid phase was 89.7 g and a mass of the liquid phase was 450 mL × 0.77 g/mL + 108 g = 454 g, with a solid-to-liquid ratio of 89.7/454 × 100% ≈ 20%. Therefore, G1 took a value of 70g. The resonant frequency of the acoustic resonance reaction platform was set to 66.7 Hz, and then each component of the reaction material in the reactor reacts for 10 min. Finally, a produced suspension was filtered and dried to obtain 89.7 g of dried *N-*methyl-*p*-nitroaniline.

According to conversion rate = mass of reactant/total mass of reaction materials × 100%, the conversion rate was calculated as 92.5%.

The particle size D50 of *N*-methyl-*p*-nitroaniline solid particles was measured by a laser particle size analyzer, 49.685 µm. The purity of *N*-methyl-*p*-nitroaniline was measured by high performance liquid chromatography (HPLC), and the results are shown in Table 1.

**Table 1. Purity of N-methyl-p-nitroaniline measured by HPLC**

| No. | Retention time min | Peak area [mAU*s] | Percentage of peak area % |
|---|---|---|---|
| 1 | 2.655 | 6328.36963 | 99.1185 |
| 2 | 2.938 | 46.64004 | 0.7305 |
| 3 | 3.295 | 9.64211 | 0.1510 |

According to Table 1, when at the retention time of 2.655 min, the peak is that of the main product *N*-methyl-*p*-nitroaniline, and the percentage of the peak area is the mass percentage (purity) of the main product, therefore the purity is 99.12%.

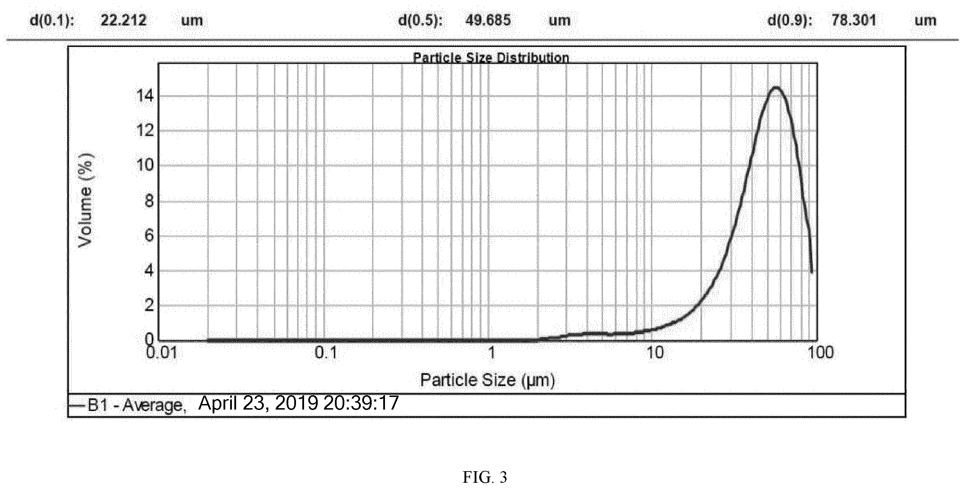

As shown in FIG. 3, the median particle size D50 of *N*-methyl-*p*-nitroaniline is 49.685 µm, meaning that the average particle size is approximately 49.685 µm. According to the particle size distribution width, 80% of particles has a particle size greater than 22.212 µm and less than 78.301 µm.

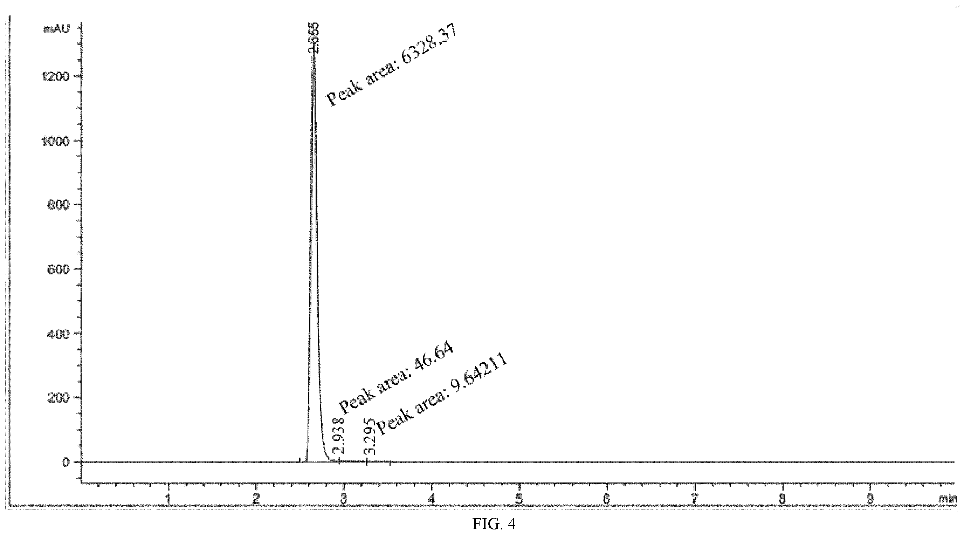

As shown in FIG. 4, the main product *N*-methyl-*p*-nitroaniline peaks at 2.655 min, with a peak area of 6328.36 mAU*s, accounting for 99.12% of the total peak area, indicating that the purity of the main product *N*-methyl-*p*-nitroaniline is 99.12%. Two byproducts peaked at 2.938 min and 3.295 min, with peak areas of 46.64 mAU*s and 9.64 mAU*s, accounting for 0.73% and 0.15% of the total peak area, respectively, indicating that the purities of the two byproducts are 0.73% and 0.15%, respectively.

### Example 2

The high low temperature integrated machine was started, and the temperature of the reactor was set to 35 °C. 80 ml of an aqueous solution of acetaldehyde (40 wt%), 77.9 ml of an aqueous solution of hydroxylamine hydrochloride (39 wt%), and 80.3 ml of an aqueous solution of sodium hydroxide (35 wt%) were taken by a metering pump and added to the reactor. The reactor was fixed to the acoustic resonance reaction platform. Frequency sweep was performed within a range of 58-70 Hz, and the resonant frequency was determined to be 67.5 Hz.

The phase difference was set to 0.03 and the acceleration G1 was set to 50g. The reaction was carried out at the resonant frequency of 67.5 Hz for 15 min to produce a suspension. The suspension was filtered and dried to obtain 44.8 g of dried glyoxime, with a conversion rate of 92.1% and a purity of 99.9% as measured by HPLC.

Compared to a conventional reactor, since acoustic resonance has a strong ability to enhance heat transfer, there is no need to worry about temperature runaway or material spraying. In addition, there is no need for feeding at a low temperature, so that a reaction temperature can be directly set.

### Example 3

The high low temperature integrated machine was started, and the temperature of the reactor was set to 58 °C. 36.6 ml of acetamidine hydrochloride, 76.8 ml of diethyl malonate, and 181 ml of sodium methoxide in methanol (30 wt%) were taken by a metering pump and added to the reactor. The reactor was placed on the acoustic resonance reaction platform. Frequency sweeping was performed and the resonant frequency was determined to be 63.8 Hz.

The phase difference was set to 0.03, and the acceleration G1 was set to 60g. The reaction was carried out at the resonant frequency of 63.8 Hz for 45 min to produce a suspension. The suspension was put into 500 ml of deionized water, and acidified with hydrochloric acid until pH = 2. The suspension was filtered and dried to obtain 2-methyl-4,6-pyrimidinedione, with a conversion rate of 80.2%.

### Example 4

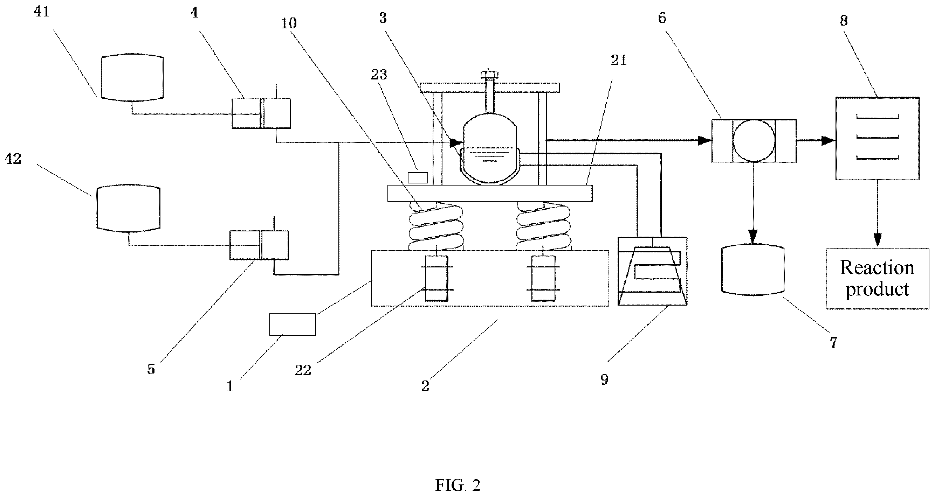

As shown in FIG. 2, this example provides a device for an acoustic resonance enhanced chemical reaction. The device is configured to implement the method for enhancing chemical reaction using resonant acoustic mixing, and includes a controller 1 and an acoustic resonance reaction platform 2 that are connected to each other, and a reactor 3 located on the acoustic resonance reaction platform 2. In this example, the reactor is fixed to the acoustic resonance reaction platform 2 through a fixed support.

The acoustic resonance reaction platform 2 includes a support plate 21. An excitation source 22 is located below the support plate 21. The excitation source 22 is connected to the controller 1 and configured to provide a vibration quantity for the acoustic resonance reaction platform 2 so as to enhance a chemical reaction inside the reactor 3. The acoustic resonance reaction platform 2 is further provided with an acceleration sensor 23 for measuring an acceleration of the acoustic resonance reaction platform 2 in real time and transmitting a measured acceleration value to the controller 1.

The controller 1 is configured to adjust a phase of the excitation source 22 in real time based on the measured acceleration value so as to adjust the acceleration of the acoustic resonance reaction platform 2.

The reactor 3 includes a feed inlet connected to a slurry pump 4 and a liquid pump 5, and a discharge outlet connected to a filter 6. The filter 6 is connected to a waste liquid tank 7 and a drying oven 8. The slurry pump 4 is configured to feed a solid-phase material into the reactor 3. The liquid pump 5 is configured to feed a liquid-phase material into the reactor 3. The slurry pump 4 and the liquid pump 5 are connected to a slurry tank 41 and a liquid tank 42, respectively.

In this example, the excitation source 22 is comprised of oscillating motors, and there are 4 oscillating motors. The reactor 3 is further connected to a high low temperature integrated machine 9. The high low temperature integrated machine 9 is configured to set a temperature within the reactor. An oscillating spring 10 is provided between the support plate 21 and the excitation source 22. The oscillating spring 10 includes one end connected to the support plate 21 and the other end connected to the excitation source 22, that is, an output shaft of the oscillating motors. The oscillating motors work to drive the oscillating spring to move vertically, thereby transmitting the vibration quantity to the acoustic resonance reaction platform 2.

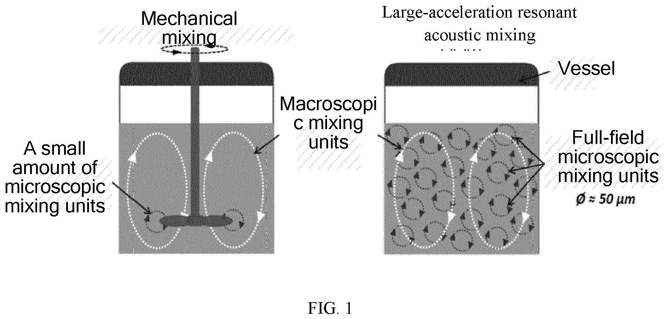

The mechanism of enhancing the chemical reaction inside the reactor 3 using resonant acoustic mixing is shown in FIG. 1.

In this example, the usage process of the device of the present disclosure is as follows.

The controller 1 and the high low temperature integrated machine 9 are started, and the temperature of the reactor 3 is set. The reaction materials are fed into the reactor 3 by the slurry pump 4 and the liquid pump 5. The reactor 3 is fixed to the acoustic resonance reaction platform 2. Frequency sweep is performed within a range 58-70 Hz, and the resonant frequency at which the acceleration G has a peak value is determined based on a value measured by the acceleration sensor 23. Then, a phase difference is set by the controller 1, and the acceleration G1 for enhancing a chemical reaction is set based on the reaction speed of the mixed material. The excitation source 22 is started to enable an acoustic resonance enhanced chemical in the reactor. After the reaction is completed, the reaction product and waste liquid are separated from each other by the filter 6 and are fed into the drying oven and the waste liquid tank respectively.

### Comparative Example 1

5 g ofp-nitrofluorobenzene was added to a 100 ml round-bottomed glass flask provided with a mechanical mixing blade and a thermometer. 25 ml of ethanol was added to the flask. The mixing was started to completely dissolve the solid. 8.5 g of an aqueous solution of methylamine (40 wt%) was added to the flask, and the flash was heated in a water bath to 75 °C to allow a reaction for 6 h. Then the temperature was reduced to room temperature. Filtering and drying were carried out to obtain 4.86 g of *N*-methyl-*p*-nitroaniline, with a conversion rate of 90.3%. The purity of *N*-methyl-*p-*nitroaniline is 98.75%, as measured by HPLC.

It can be seen from the above data that the conversion rate and product purity in Comparative Example1 were lower than those in Example 1.

### Comparative Example 2

30 ml of an aqueous solution of sodium hydroxide (35 wt%) was added to a 500 ml round-bottomed glass flask provided with a mechanical mixing blade and a thermometer. Mixing was started, and the temperature was reduced to 0 °C. 27.8 g of hydroxylamine hydrochloride was slowly added for multiple times. After hydroxylamine hydrochloride was fully dissolved, 22.8 ml of glyoxal solution (40 wt%) was slowly added. After the reaction was carried out for 30 min, the temperature was increased to room temperature and held for 12 h. Filtering and rinsing with 30 ml of ice water were carried out. Then, drying was carried out to obtain 13.8 g of dried glyoxime, with a conversion rate of 78%. The purity of glyoxime is 98.13%, as measured by HPLC.

It can be seen from the above data, the conversion rate and product purity in Comparative Example2 were lower than those in Example 1. Especially, there was a significant difference in the conversion rate between this comparative example and Example 2. In addition, compared to Example 2, it was necessary to add the materials at a low temperature and raise the temperature to the required reaction temperature after the materials are added in order to prevent temperature runaway and material spraying in this comparative example.

### Comparative Example 3

65 ml of sodium methoxide in methanol (30 wt%), 18.9 g of acetamidine hydrochloride, and 27.6 ml of diethyl malonate were added to a 500 ml round-bottomed glass flask provided with a mechanical mixing blade and a thermometer at 0 °C. The mixing blade was started, and the temperature was increased by an oil bath to 90 °C. The reaction was carried out for 3 h, and then the temperature was reduced to room temperature. After the reaction was completed, the reaction solution was poured into 500 ml of ice water. The pH of the resulting solution was adjusted to 2 at 10 °C, and a large amount of white solid was precipitated. Suction filtration was carried out, and a filter cake was rinsed with water and ethanol. Then, the filter cake was vacuum-dried to obtain 21.5 g of dried 2-methyl-4,6-pyrimidinedione, with a conversion rate of 83.8%.

The product conversion rate in this comparative example was not significantly different from that in Example 3. However, there were many operational steps in this comparative example, and it was necessary to add materials at a low temperature and raise the temperature to the required reaction temperature after the materials are added. Besides, the method of the present disclosure can omit purification steps.

## Claims

1. A method for enhancing chemical reaction using resonant acoustic mixing, **characterized in that** the method comprises the following steps:
step 1: adding each component of a reaction material into a reactor fixed to an acoustic resonance reaction platform;
step 2: adjusting an acceleration G of the acoustic resonance reaction platform by means of a phase difference, performing frequency sweep within a low frequency range, and determining a frequency at which the acceleration G has a peak value as a resonant frequency; and
step 3: allowing each component of the reaction material to react at the resonant frequency and a set acceleration G1 to produce a suspension; and subjecting the suspension to filtration, drying, and baking sequentially to give a reaction product;
wherein, the acceleration G and the acceleration G1 are constant values, 1g ≤ G ≤ 90g, and 1g ≤ G1 ≤ 90g, where g denotes a gravitational acceleration, g = 9.8 m/s².

2. The method for enhancing chemical reaction using resonant acoustic mixing according to claim 1,
**characterized in that**
the reaction material comprises a material for preparing an energetic material, and the energetic material comprises one of more of a group consisting of *N*-methyl-*p*-nitroaniline, glyoxime, 2-methyl-4,6-pyrimidinedione, nitroglycerin (NG), 2,4,6-trinitrotoluene (TNT), hexogen (RDX), octogen (HMX), pentaerythrityl tetranitrate (PETN), hexanitrohexaazaisowurtzitane (CL-20), 1,1-diamino-2,2-dinitroethene (FOX-7), dihydroxylammonium 5,5'-bistetrazole-1,1'-diolate (HATO), 3-nitro-1,2,4-triazole-5-one (NTO), ammonium dinitramide (ADN), and 2,6-diamino-3,5-dinitropyrazine-1-oxide (LLM-105).

3. The method for enhancing chemical reaction using resonant acoustic mixing according to claim 1,
**characterized in that**
the phase difference has a value in a range of 0.01-0.2.

4. The method for enhancing chemical reaction using resonant acoustic mixing according to claim 1,
**characterized in that**
the frequency sweep is performed within a low frequency range of 58-70 Hz, with a step of 0.2-2 Hz and a dwell time of 1-3 s at each frequency point.

5. The method for enhancing chemical reaction using resonant acoustic mixing according to claim 1,
**characterized in that**
for a solid-liquid reaction, when a weight percentage of a solid component of the reaction material is 0.1-40 wt%, the acceleration G1 is adjusted within a range of 30-90g; and
for a homogeneous reaction, the acceleration G1 is adjusted within a range of 1-90g.

6. The method for enhancing chemical reaction using resonant acoustic mixing according to claim 4,
**characterized in that**
the frequency sweep is performed with a step of 0.5 Hz and a dwell time of 2 s at each frequency point.

7. A device for enhancing chemical reaction using resonant acoustic mixing, configured to implement the method for enhancing chemical reaction using resonant acoustic mixing according to any one of claims 1 to 6,
**characterized in that**
the device comprises a controller (1) and an acoustic resonance reaction platform (2) that are connected to each other, and a reactor (3) located on the acoustic resonance reaction platform (2),
the acoustic resonance reaction platform (2) comprises a support plate (21) and an excitation source (22) located below the support plate (21), the excitation source (22) is connected to the controller (1) and configured to provide a vibration quantity for the acoustic resonance reaction platform (2) so as to enhance a chemical reaction inside the reactor (3); and the acoustic resonance reaction platform (2) is further provided with an acceleration sensor (23) for measuring an acceleration of the acoustic resonance reaction platform (2) in real time and transmitting a measured acceleration value to the controller (1);
the controller (1) is configured to adjust a phase of the excitation source (22) in real time based on the measured acceleration value so as to adjust the acceleration of the acoustic resonance reaction platform (2); and
the reactor (3) comprises a feed inlet connected to a slurry pump (4) and a liquid pump (5) and a discharge outlet connected to a filter (6), and the filter (6) is connected to a waste liquid tank (7) and a drying oven (8).

8. The device for enhancing chemical reaction using resonant acoustic mixing according to claim 7,
**characterized in that**
the excitation source (22) is comprised of oscillating motors, and there are 2-6 oscillating motors.

9. The device for enhancing chemical reaction using resonant acoustic mixing according to claim 7,
**characterized in that**
the reactor (3) is further connected to a high low temperature integrated machine (9).

10. The device for enhancing chemical reaction using resonant acoustic mixing according to claim 7,
**characterized in that**
an oscillating spring (10) is provided between the support plate (21) and the excitation source (22), and one end of the oscillating spring (10) is connected to the support plate (21), and an other end of the oscillating spring (10) is connected to the excitation source (22).
